(19) Europäisches Patentamt
European Patent Office
Office européen des brevets

(11) Publication number: **0 182 996**
**A1**

(12) # EUROPEAN PATENT APPLICATION

(21) Application number: 85112033.7

(22) Date of filing: 23.09.85

(51) Int. Cl.⁴: C 08 G 18/76
C 08 G 18/80, C 07 C 125/073
C 07 C 125/077

(30) Priority: 26.10.84 US 665337

(43) Date of publication of application: 04.06.86 Bulletin 86/23

(84) Designated Contracting States: AT BE CH DE FR GB IT LI NL SE

(71) Applicant: AMERICAN CYANAMID COMPANY
1937 West Main Street P.O. Box 60
Stamford Connecticut 06904(US)

(72) Inventor: Sedlak, John Andrew
249-11 Hamilton Avenue
Stamford Connecticut 06902(US)

(74) Representative: Wächtershäuser, Günter, Dr.
Tal 29
D-8000 München 2(DE)

(54) **Polyfunctional tertiary aralkyl isocyanate compounds and compositions.**

(57) Novel reaction products are disclosed which comprise adducts of a tertiary aralkyl diisocyanate compound and a polyol which contains more than two hydroxyl groups per molecule. The amounts of diisocyanate and polyol employed are sufficient to provide an NCO/OH ratio of from about 2 to about 10.0 in the reaction mixture. The preferred reactants comprise m- or p- tetramethylxylylenediisocyanate and 1,1,1-trimethylolpropane. The adducts possess poly-tertiary aralkyl isocyanate functionality which may or may not be further reacted with a blocking component. In admixture with compounds containing active hydrogens, the adducts provide improved polyurethane compositions useful in the preparation of non-yellowing, gloss-retaining polyurethane articles and polyurethane films, coatings, castings, binders, elastomers and adhesives.

EP 0 182 996 A1

# POLYFUNCTIONAL TERTIARY ARALKYL ISOCYANATE COMPOUNDS AND COMPOSITIONS

The present invention relates to novel reaction products useful in the preparation of polyurethane articles such as films, coatings, castings, binders and adhesives. More particularly, it relates to reaction products of certain tertiary aralkyl diisocyanates with polyhydroxyl compounds useful in the production of storage stable, non-yellowing, gloss retaining polyurethane articles and polyurethane films, coatings, castings, binders and adhesives.

The use of polyurethane resins for forming useful articles such as films, coatings, foams, castings, elastomers, binders, and adhesives has obtained widespread commercial importance. Most prior art polyurethane compositions, however, are characterized by their inability to retain good color and gloss properties, as manifested by their tendency to discolor or yellow upon exposure to sunlight and to lose gloss and adhesive properties upon aging. Further disadvantages of the prior art polyurethane compositions have included poor storage stability because of the high reactivity of isocyanate groups to atmospheric moisture, solvents and other materials possessing active hydrogens, as well as toxicity problems encountered with low molecular weight isocyanate compounds which are very volatile and cause respiratory irritation in humans at extremely low levels, e.g., at concentrations on the order of 0.02 ppm in a closed environment, along with other attendant health hazards.

Early attempts to improve the storage stability of the polyurethane compositions have included prereacting the isocyanate groups with phenols as blocking agents. Thereafter, the blocked isocyanates are admixed with polyol components to form stable urethane compositions. These mixtures are coated, for example, on a substrate and the substrate and coating are then heated at elevated temperature, e.g., 350°-400°C, to dissociate the phenol from the isocyanate groups, thereby liberating the isocyanate groups for reaction with the polyol to form urethanes. A disadvantage with the above-described compositions is that typically they have been based upon aromatic diisocyanate compounds, i.e., compounds containing isocyanate groups bonded directly to a carbon atom of an aromatic nucleus, such as toluene diisocyanate, which exhibit extremely poor ultraviolet light stability and poor weatherability.

It is known that aliphatic isocyanate compounds exhibit improved resistance to discoloration and improved weatherability caused by exposure to sunlight or other sources of ultraviolet light. By aliphatic isocyanate is meant an organic isocyanate compound wherein the isocyanate group or groups are bonded directly to an aliphatic carbon atom. In U.S. 3,281,378, it was disclosed that useful polyurethane articles having good color stability, gloss retention and adhesion properties are provided in the form of aliphatic isocyanate - polyol adducts from reactant mixtures having NCO/OH ratios of from 0.1 to 6.0. A serious shortcoming for these compositions is that aliphatic isocyanate compounds of the type described therein remain unattractively expensive to use.

Tertiary aralkyl isocyanate compounds and polyurethane compositions incorporating same are disclosed in U.S. 2,723,265 to Stallman, and in U.S. 3,290,350 to Hoover. These tertiary aralkyl isocyanate compounds are ultraviolet light stable as are aliphatic isocyanates, and have the added advantage that they are relatively inexpensive to prepare and use.

It has now been discovered that new and improved polyurethane compositions for use in coatings, castings, elastomers and adhesive applications can be provided based upon novel reaction products of certain tertiary aralkyl isocyanates and certain polyol compounds.

In accordance with the present invention, new and improved reaction products are provided for use in polyurethane compositions and applications. The novel reaction products comprise the reaction product of a tertiary aralkyl diisocyanate compound of the formula:

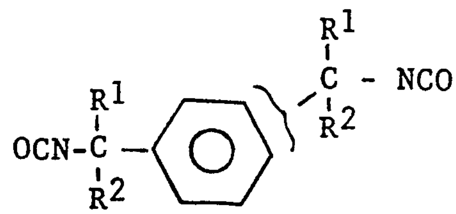

wherein $R^1$ and $R^2$ are each, independently, selected from alkyl or substituted alkyl, with a polyol material sufficient in amount to provide an NCO/OH ratio in the reactants from about 2.0 to about 10.0. In preferred embodiments, the tertiary aralkyl diisocyanate compound is meta-$\alpha,\alpha,\alpha',\alpha'$-tetramethylxylylenediisocyanate or para-$\alpha,\alpha,\alpha',\alpha'$-tetramethylxylylenediisocyanate.

The polyols for reaction with the tertiary aralkyl diisocyanate compounds useful for forming the poly tertiary aralkyl isocyanate-functional adduct reaction products of the present invention may generally comprise any poly hydroxyl-functional compounds and may be monomeric, oligomeric or polymeric materials. Typically and without limitation, the polyol will comprise a polyol compound containing more than 2 and up to about 10 hydroxyl groups and having a molecular weight of from about 100 to about 3,000. An especially preferred polyol for forming the useful reaction products of the present invention is trimethylolpropane.

The new and improved reaction products of the

present invention may generally be prepared by allowing the polyol material to react with the diisocyanate, optionally in a solvent solution and optionally in the presence of a catalyst, for a time sufficient to allow the reaction between isocyanate groups and the hydroxyl groups to proceed until substantially complete. It is preferred to have the various reagents and solvents in anhydrous form to prevent premature and undesirable reactions between the isocyanate groups and water. Typically, the tertiary aralkyl diisocyanate compound and the polyol compound are reacted at temperatures of between about 20°C and 100°C for a period of from about 4 to about 25 hours, although if a catalyst is employed, such as dibutyl tin dilaurate, which is preferred, reaction times may be reduced.

The new and improved reaction products of the present invention may be employed in preparing a wide variety of improved polyurethane articles, including films, coatings, castings, elastomers, foams, binders, adhesives, and the like, by admixing the reaction products as one or two component compositions with various crosslinking agents, alone or in further admixture with solvents, fillers, catalysts, foaming agents and the like. The tertiary aralkyl isocyanate functionality of the adduct reaction products of the present invention is useful for forming polyurethane articles of excellent ultraviolet light stability and long term weatherability. The articles prepared from the reaction products of the present invention will not discolor or yellow upon extended exposure to sunlight or other sources of ultraviolet light and exhibit long term durability and flexibility as evidenced by environmental solvent resistance and abrasion resistance and high resistance to brittleness upon aging.

The tertiary aralkyl isocyanate groups are also less reactive at room temperatures to active hydrogen containing compounds, which provides increased gelation times and increased storage stability in two-component

and one component polyurethane compositions.

The storage stability of the compositions of the present invention may be further improved by blocking the isocyanate groups of the reaction products with a blocking component. Known blocking components may be employed for this purpose, such as a phenol. However it is preferred to use blocking agents selected from a ketoxime compound or ε-caprolactam. These blocked adduct reaction products, which are an alternate embodiment of the present invention, may be employed in anhydrous powder form alone or in admixture with dry polymeric polyol compounds, to provide curable powder coatings for such applications as wire enamels and the like.

The new and improved reaction products of the present invention are useful in a wide variety of one component and two component polyurethane resin compositions and applications, wherein improved storage stability, UV stability, weatherability, abrasion resistance, solvent resistance, gloss retention, adhesion and decreased costs are required or desired.

Other objects and advantages of the present invention will become apparent from the following detailed description of the invention, in conjunction with the following illustrative working examples.

In accordance with the present invention novel reaction products for use in polyurethane compositions and applications broadly comprise adduct reaction products of a tertiary aralkyl diisocyanate compound with a polyol compound.

The tertiary aralkyl diisocyanates for use in preparing the reaction products of the present invention generally comprise tertiary aralkyl diisocyanate compounds of the formula:

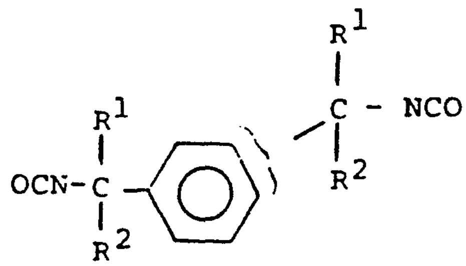

wherein $R^1$ and $R^2$ are each, independently, selected from alkyl or substituted alkyl. Illustrative examples include α,α, α', α'-tetramethyl-1,3-xylylenediisocyanate, α,α, α', α'-tetramethyl-1,4-xylylene diisocyanate, α, α'-dimethyl, α, α'-dipropylxylylene diisocyanate and the like.

The preferred tertiary aralkyl diisocyanates for use herein are α,α, α', α'-tetramethyl-1,3-xylylene-diisocyanate (m-TMXDI) and α,α, α', α'-tetramethyl-1,4-xylylenediisocyanate (p-TMXDI).

The tertiary aralkyl diisocyanate may be prepared in a variety of ways, such as by reacting the corresponding tertiary alcohol with sodium cyanide in a mixture of acetic and sulfuric acids to yield N-alkyl formamides followed by hydrolysis with aqueous alkalies to form tertiary diamines which may thereafter be phosgenated to tertiary aralkyldiisocyanates, as described by Stallman in U.S. 2,723,265, the teachings of which are incorporated herein by reference. Another method, disclosed by Hoover in U.S. 3,290,350, comprises reacting a corresponding vinylidene compound, e.g., diisopropenylbenzene, with isocyanic acid in the presence of an acid catalyst at temperatures of between 75°C and 150°C, which method and teachings are also incorporated herein by reference.

In accordance with the present invention, the above-described tertiary aralkyl diisocyanates are reacted with certain polyol materials to form the novel adduct reaction products of the present invention.

The polyol compounds for use in forming the new and improved reaction products of this invention may

include monomeric, oligomeric or polymeric starting materials possessing a plurality of hydroxyl groups. Typically and without limitation, the polyol employed may be selected from poly-hydroxyl functional materials containing about 3 to about 10 hydroxyl groups and having a molecular weight of from about 100 to about 3,000.

Illustrative examples of monomeric polyol compounds for use herein are 1,1,1-trimethylolpropane, glycerol, 1,2,6-hexanetriol, sorbitol, pentaerythritol, and mixtures of any two or more of these polyols.

Suitable oligomeric or polymeric polyol starting materials may comprise any of the polyhydroxyl functional polyethers, polyesters, polyacrylates and polyepoxides known to those skilled in this art.

In general, the monomeric polyols are preferred for use in forming the novel adduct reaction products of the present invention because they provide adduct materials having relatively higher concentrations of tertiary aralkyl isocyanate functionality. A preferred monomeric polyol reactant is 1,1,1-trimethylolpropane.

The novel adduct reaction products of the present invention may be simply prepared by reacting predetermined amounts of the polyol material with the tertiary aralkyl isocyanate sufficient to provide an NCO/OH ratio in the reactants of from about 2.0 to about 10.0. The starting materials are reacted at temperatures of between about 20°C and 100°C, and preferably between about 60°C and 90°C, for a time sufficient to permit reaction between isocyanate groups and each of the hydroxyl groups on the polyol to be substantially complete.

It is preferred to react the starting materials in anhydrous form under anhydrous conditions. Accordingly, the polyol material may be stripped of undesired water by azeotropic distillation in accordance with conventional methods. In addition, reaction between the diisocyanate compound and the polyol or mixture of polyols should be conducted under a protective blanket of dry

nitrogen in a reaction vessel previously purged with dry nitrogen gas.

The reaction generally proceeds exothermically, and care should be taken to control reaction temperatures so that they remain below the temperature at which undesirable polymerization and biuret and/or allophanate side products may be formed.

The reaction may be conducted with or without a solvent, and when a solvent is employed either for the reaction between the tertiary aralkyl diisocyanate and the polyol compound or when the final reaction product is solubilized in the preparation of a coating composition, any known polyurethane solvent which will not react with the isocyanate groups present, may be employed. Illustrative suitable solvents which may be used herein include aromatic hydrocarbon solvents such as benzene, toluene and xylene, halogenated hydrocarbon solvents such as methylene chloride and dichloroethane, as well as non-hydroxyl containing esters or ethers such as amyl acetate, butyl acetate, ethyl acetate, cellosolve acetate and methyl cellosolve acetate.

The reaction between the tertiary aralkyl diisocyanate and the polyol compound to form the novel adduct reaction products of the present invention may also optionally be conducted in the presence of a catalyst. Suitable catalysts for use herein are organometallic urethane catalysts, such as tin acetate, tin octanoate, tin oleate, tin laurate, dibutyltin diacetate, dibutyltin dilaurate, dibutyltin dichloride, nickel naphthenate, cobalt naphthenate, mercury phenylacetate, nickel acetylacetonate, copper acetylacetonate, ferrous or ferric acetylacetonate, and molybdenum acetylacetonate oxide. A preferred catalyst for use herein is dibutyltin dilaurate.

The reaction products of the present invention are prepared by reacting an excess of the tertiary aralkyl diisocyanate with the polyol, optionally in the presence of a suitable solvent and optionally in the presence of a

suitable catalyst, under anhydrous conditions at temperatures of between about 20°C and 100°C for a period of from about 4 to about 25 hours or until reaction therebetween is substantially complete.

The reaction in accordance with this invention may be illustrated with idealized formulas from preferred starting materials as follows:

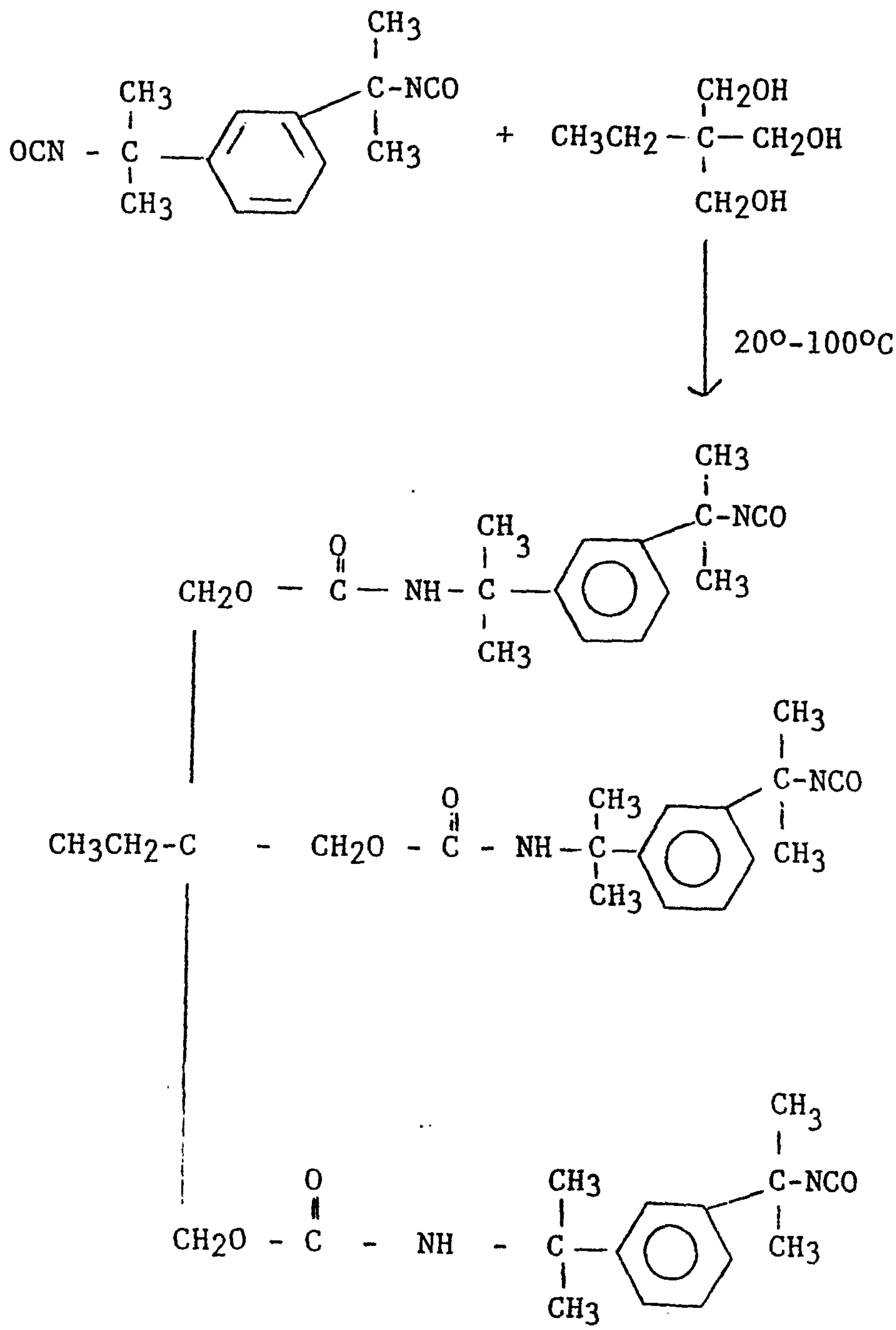

The novel adduct reaction products may be isolated from the reaction mixture in accordance with known methods, such as, by briefly heating the reaction mixture at elevated temperatures, e.g., 100-200°C and at reduced pressures of 0.1 to about 0.8 torr. The unreacted tertiary aralkyl diisocyanate may thereby be recovered for further use, leaving the adduct reaction products of this invention.

The adduct reaction products of this invention may be advantageously used as the isocyanate component for forming new and improved one and two component polyurethane compositions for forming many and varied useful articles such as films, coatings, castings, binders, adhesives and the like.

The new and improved adduct reaction products of the present invention can be made to contain extremely low levels of free diisocyanate and therefore the use of these adducts provides a significant reduction in the health hazards associated with the more volatile, pure TMXDI and other free aromatic or aliphatic diisocyanate reagents employed in the prior art. Moreover, the exceptional ultra-violet light stability and long term weather resistance provided by the tertiary aralkyl diisocyanate polyol adducts greatly exceeds that obtained using prior art aromatic isocyanates and is comparable to that obtained using aliphatic diisocyanates, such as hexamethylene diisocyanate, however, at a substantial cost savings.

In an alternate embodiment, the above-described reaction products are further reacted with a blocking component such that a heat labile group capable of regenerating free NCO groups at elevated temperature is provided. Blocking agents suitable for use in this aspect of the present invention are phenol, acetylacetone, cresols, ketoximes, ε-caprolactam and the like, which react to block the free isocyanate groups on the adducts. The use of these blocking components and their preparation are

generally well known to those skilled in this art. The blocked adduct reaction products in accordance with this embodiment of the present invention are prepared by reacting the polytertiary aralkyl isocyanate-functional reaction product with an amount of blocking component to provide a slight excess of blocking component over isocyanate groups. This excess promotes blocking of substantially all of the isocyanate groups present in the reaction product adduct materials.

The blocked isocyanate/polyol adducts of the present invention are generally non-reactive with compounds containing active hydrogens, and therefore the use of the adduct in admixture with hydroxyl bearing compounds provides polyurethane compositions having increased pot lives and extended storage stability.

The blocked isocyanate adduct reaction products may thereafter be heat activated, i.e., the heat labile blocking components may be removed and active isocyanate groups be regenerated, by heating the blocked reaction products or compositions containing same to a temperature sufficient to dissociate the blocking component from the isocyanate groups. The exact temperature required to unblock the blocking component varies depending upon the blocking component used, however, typically and without limitation, unblocking is accomplished by heating the blocked adduct or polyurethane composition containing the blocked reaction product to temperatures of between about 80°C to about 200°C.

Both the blocked and the unblocked novel reaction products of the present invention may be employed to form new and improved light stable polyurethane compositions by admixing the reaction product with a compound containing a plurality of active hydrogen groups, and preferably a polyol material.

Suitable polyol compounds which may be admixed with the reaction products of the present invention to form useful polyurethane compositions include: Monomeric

polyols such as ethylene glycol, propylene glycol, diethylene glycol, triethylene glycol, dipropylene glycol, trimethylene glycol, and 1,3- and 1,4-butanediol.

Polyether polyols, which are obtained by effecting addition of one type, or two types or more, among, for example, ethylene oxide, propylene oxide, butylene oxide, tetrahydrofuran, and styrene oxide, with for example, water, ethylene glycol, propylene glycol, diethylene glycol, triethylene glycol, dipropylene glycol, trimethylene glycol, 1,3- and 1,4-butanediol, 1,5-pentanediol, 1,2-hexylene glycol, 1,10-decanediol, 1,2-cyclohexanediol, 2-butene-1,4-diol, 3-cyclohexane-1,1-dimethanol, 4-methyl-3-cyclohexane-1,1-dimethanol, 3-methylene-1,5-pentanediol-(2-hydroxyethoxy)-1-propanol, 4-(2-hydroxyethoxy)-1-butanol, 5-(2-hydroxypropoxy)-1-pentanol, 1-(2-hydroxymethoxy)-2-hexanol, 1-(2-hydroxypropoxy)-2-octanol, 3-allyloxy-1,5-pentanediol, 2-allyloxymethyl-2-methyl-1,3-pentanediol, (4,4-pentyloxymethyl)-1,3-propanediol, 3-(o-propenylphenoxy)-1,2-propanediol, 2,2'-diisopropylidenebis (p-phenyleneoxy) diethanol, glycerol, 1,2,6-hexanetriol, 1,1,1-trimethylolethane, 1,1,1-trimethylolpropane, 3-(2-hydroxyethoxy)-1,2-propanediol, 3-(2-hydroxypropyl)-1,2-propanediol, 2,4-dimethyl-2-(2-hydroxyethoxy)-methylpentanediol, 1,1,1-tris ((2-hydroxyethoxy)methyl)-ethane, 1,1,1-tris ((2-hydroxypropoxy) methyl) propane, pentaerythritol, sorbitol, sucrose, lactose, α-methyl glucoside, α-hydroxyalkyl glucosides, novolak resin, and the like.

Polyester polyols formed of one type, or two types or more, among compounds which possess at least two hydroxyl groups, such as polytetramethylene ether glycol, also ethylene glycol, diethylene glycol, triethylene glycol, 1,2-propylene glycol, dipropylene glycol, trimethylene glycol, 1,3- and 1,4-butanediol, tetramethylene glycol, neopentyl glycol, hexamethylene glycol, decamethylene glycol, glycerin, trimethylol propane, hexanetriol, pentaerythritol, and sorbitol, and of one type, or two types or more, among compounds which possess at least

two carboxyl groups, such as malonic acid, maleic acid, succinic acid, adipic acid, tartaric acid, pimelic acid, sebacic acid, oxalic acid, phthalic acid, terephthalic acid, isophthalic acid, hexahydrophthalic acid, aconitic acid, trimellitic acid, and hemimellitic acid can also be used.

Also ring-opened polymers of cyclic esters as polycaprolactone; and furthermore, the so-called polymer polyol compositions among polyether polyols and/or polyester polyols which can be obtained by polymerizing ethylenic unsaturated compounds, such as poly-1,2-butadiene glycol, poly-1,4-butadiene glycol, polyhydroxy polyacrylate, and epoxy resins.

The compositions of the present invention may be utilized in preparing a wide variety of polyurethane articles including films, coatings, castings, elastomers, foams, binders, adhesives, and the like in the manner well known in the art. Those compositions prepared from an NCO/OH ratio in the reactants of at least unity and preferably from 2.0-10.0 are outstandingly suitable for preparing films and coatings. For example, after adding a suitable amount of solvent to these compositions, they may be brushed onto a particular surface and then cured either by air drying at room temperature or by heating up to a temperature of about 120°C or so in the presence of sufficient moisture to accelerate the cure and improve the physical properties of the film. This is generally known as a one component or moisture-cured system. Alternatively, the compositions may be mixed prior to use with a hydroxyl-containing polymer such as a polyether of suitable molecular weight. This is generally known as a two component system. A "blocked" film or coating system may be prepared by reacting the compositions with a blocking agent such as phenol, acetylacetone, cresols, and the like so as to block the free isocyanate groups. A solution of this blocked adduct which also contains a polyester or other polyol may then be applied to a surface and cured by

heating the coating to a temperature sufficient to decompose the adduct and allow cure by reaction of isocyanate groups with hydroxyl groups. Yet another one component film and coating system involves the reaction of compositions of the present invention with hydroxyl containing oils containing a high degree of unsaturation. A film prepared from this final "oil-modified" composition is then cured by air drying wherein the unsaturated groups react with oxygen.

The films and coatings produced from the compositions of the invention possess an extremely high degree of color stability and gloss retention upon exposure to sunlight or very strong ultraviolet light illumination for prolonged periods of time. This is in contrast to the extreme discoloration of films derived from aromatic diisocyanates similarly exposed. In addition, the films and coatings exhibit a higher degree of adhesion to aged surface coatings and to surfaces in general than do the films and coatings of the prior art.

In addition, those isocyanate-terminated reaction products prepared from reactants having an NCO/OH ratio of greater than unity may be foamed to produce cellular materials having the desired color stability referred to. The foaming may be effected by introducing into the reaction product a quantity of water and/or Freon in accordance with known foaming techniques.

Isocyanate terminated reaction products of the invention may be employed to produce elastomeric compositions as heretofore indicated by curing with amines or polyols, and such compositions will be non-yellowing upon prolonged exposure to light when the curing system does not involve aromatic compounds.

New and improved polyurethane compositions comprising the new and improved tertiary aralkyl diisocyanate/polyol adducts of the present invention may additionally contain other optional additives such as fillers, flame retardants, pigments, flow promoters, pigment dispersants

and the like, all added in their conventional amounts.

In order that those skilled in the art may better understand how the present invention may be practiced, the following examples are provided by way of illustration and not by way of limitation.

## EXAMPLE 1

## PREPARATION OF A m-TMXDI/TMP ADDUCT

The following Example illustrates the preparation of a new and improved reaction product of the present invention.

The reactants were as follows: trimethylolpropane (TMP) (2-ethyl-2-hydroxymethyl-1,3-propanediol), 154.1g (1.15 moles); dried by azeotropic distillation with toluene at atmospheric pressure.

m-TMXDI, 2244.8g (9.20 moles) total; 10.0g used to prepare a catalyst solution.

A catalyst solution was prepared by dissolving 0.154g of dibutyltin dilaurate in 10.0g of m-TMXDI (0.100% of catalyst based on weight of TMP).

## EQUIPMENT

A three liter, 3-neck, round bottom Pyrex flask fitted with paddle stirrer, immersion thermometer, 250 ml. electrically-heated addition funnel, and provision for maintaining a dry nitrogen atmosphere in the entire apparatus. The flask was immersed in an electrically heated oil bath.

## PROCEDURE

m-TMXDI, 2234.8g, was placed in the reaction flask under dry nitrogen and was heated to 80°C. Then the freshly-made catalyst solution was added.

With vigorous stirring, melted TMP was added dropwise from the addition funnel at a constant rate during six hours. Although the reaction was exothermic, the temperature was easily controlled at 80°C by adjusting the voltage on the oil bath.

The reaction solution became more viscous during the TMP addition but remained easily stirrable. After the

TMP addition was complete, the solution was stirred for three more hours at 80°C and several more hours while cooling to room temperature. The result was a clear, viscous, pourable solution.

The product solution was stripped on a Pope wiped-film evaporator (two inch diameter) at 170-180°C and 0.4 torr with a feed rate of 110g/hr. Unreacted m-TMXDI was recovered and m-TMXDI/TMP adduct was secured as a glassy solid with melting range of approximately 65-100°. The solid was readily soluble in organic solvents such as toluene, methylene chloride, and acetone.

RESULTS

The preparation following the above procedure gave 922g of solid adduct and 1448g of recovered m-TMXDI.

The solid product contained approximately 0.2% free m-TMXDI (by gas chromatographic analysis) and showed no hydroxyl absorption in the infrared. Isocyanate analysis (by di-n-butylamine titration) found 12.6 wt. % NCO in the solid. Gel permeation chromatography indicated that components with molecular weights up to about 3500 (as measured with polystyrene standards) were present.

EXAMPLE 2

A blocked adduct reaction product in accordance with the present invention was prepared as follows:

A 30% solution of the m-TMXDI/TMP adduct reaction product of Example 1 was prepared by dissolving 333.3g (1 molar equiv. of NCO) of the m-TMXDI/TMP adduct in 778g of toluene. Thereafter 87.0g (1 molar equivalent) of methyl ethyl ketoxime (2-butanone oxime) (MEKO) was added and the mixture heated at 70°C, maintained at that temperature for about 1 hour, and then permitted to cool. No NCO was present upon IR analysis.

The MEKO-blocked adduct was obtained from solution, by first adding an equal weight of a methylene chloride diluent and thereafter precipitating blocked adduct product by slowly pouring the reaction mixture

into stirred hexane. A white solid precipitate formed which was filtered, washed with hexane and thereafter dried under vacuum. 318G of dried blocked adduct was obtained having an indistinct melting point starting at 65°C.

EXAMPLE 3

Another blocked adduct reaction product was prepared in accordance with the method of Example 2 except that an excess of 1.10 molar equivalents of ε-caprolactam was added as the blocking component instead of the MEKO and in addition 2% by weight of dibutyltin dilaurate catalyst was added.

The reaction mixture was heated to 80°C and held at that temperature until IR analysis showed no NCO content. The caprolactam blocked-adduct reaction product was diluted, precipitated in hexane, filtered, washed with hexane and vacuum dried in accordance with the procedures of Example 2. 314 Grams of a white solid were obtained having a melting range of between 61-77°C.

EXAMPLE 4

Polyurethane coating compositions were prepared by solution admixing the m-TMXDI/TMP reaction product of Example 1, the MEKO-blocked m-TMXDI/TMP reaction product prepared in Example 2 and the ε-caprolactam-blocked m-TMXDI/TMP adduct of Example 3, respectively, with a polyester polyol derived from o-phthalic acid, adipic acid and trimethylol propane (Multron 221-75 from Mobay Chemical Co.); a dimethyltin dilaurate catalyst (U.L. 28, from Witco Chemical) and a high molecular weight acrylic resin as a flow control additive (Modaflow, from Monsanto Company).

The polyurethane coating compositions were coated onto aluminum slabs in the form of draw downs on 1200S aluminum using a # 40 Wirecator. After a 10 minute hold out the coatings were cured.

The cured polyurethane coatings were tested for solvent-abrasion resistance by rubbing with a rag soaked

in methyl ethyl ketone, in accordance with standard testing methods. The number of repeated rubs required to produce the first visual marring on the surface of the coating and the number of rubs to remove at least 50% of the coating were noted and recorded.

The formulations used and the results obtained are set forth in Table 1 as follows:

TABLE 1: POLYURETHANE COATINGS BASED ON m-TMXDI/TMP ADDUCT REACTION PRODUCTS

| COMPOSITION (pbw)* | 1 | 2 | 3 |
|---|---|---|---|
| Polyester polyol (75% in toluene)[1] | 7.8 | 5.2 | 5.2 |
| m-TMXDI/TMP Adduct (65% in toluene)[2] | 8.6 | - | - |
| MEKO-Blocked m-TMXDI/TMP adduct (55% in toluene)[3] | - | 12.2 | - |
| ε-caprolactam-blocked m-TMXDI/TMP (60% in tol.)[4] | - | - | 11.5 |
| Dimethyltin dilaurate catalyst (10% in toluene)[5] | 1.14 | 1.06 | 1.08 |
| Flow control Additive[6] | 0.59 | 0.53 | 0.54 |
| Toluene | | | |

1. Multron® 221-75, Mobay Chemical Co.
2. Adduct of Example 1.
3. Blocked adduct of Example 2.
4. Blocked adduct of Example 3.
5. UL-28, Witco Chemical Company.
6. MODAFLOW® , Monsanto Company.

*Each of the above-defined formulations had a % non-volatiles of 60%; an NCO/OH ratio of 1.1/1.0; 1.0% by weight of dimethyltin dilaurate, per total resin solids; and 0.5% by weight of acrylic flow promoter.

| COATING PROPERTIES | 1 | 2 | 3 |
|---|---|---|---|
| Cure Schedule, 20 min./°C | 80° | 175° | 175° |
| coating thickness, mils | 1.2 | 0.75 | 0.8 |
| knoop hardness | 12.7 | 16.2 | 15.0 |
| Solvent resistance, | | | |
| methyl ethyl ketone, rubs | | | |
| mar | 20 | 20 | 10 |
| remove | 120 | 160 | 40 |

The new and improved unblocked as well as blocked tertiary aralkyl diisocyanate/polyol reaction products of this invention provide polyurethane coating compositions having excellent hardness and solvent resistance.

Although the present invention has been described with reference to certain preferred embodiments, it is apparent that modifications or changes may be made therein by those skilled in the art without departing from the scope and spirit of the present invention as defined by the appended claims.

CLAIMS:

1. The reaction product of a tertiary aralkyl diisocyanate compound of the formula:

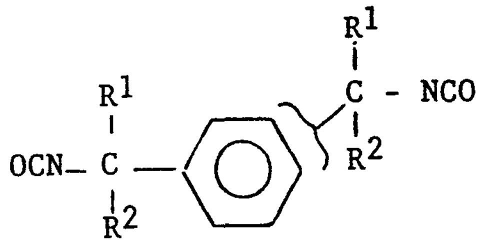

wherein $R^1$ and $R^2$ are each independently selected from alkyl, or substituted alkyl, with a polyol material containing more than two hydroxyl groups per molecule sufficient in an amount to provide an NCO/OH ratio in the reaction mixture of from about 2.0 to about 10.0.

2. The reaction product as recited in Claim 1, wherein said polyol material is a polyol containing from 3 to about 10 hydroxyl groups and having a molecular weight of from about 100 to about 3,000.

3. The reaction product as defined in Claim 2, wherein said polyol is a monomeric polyol selected from trimethylolpropane, glycerol, 1,2,6-hexanetriol, sorbitol, pentaerythritol and mixtures thereof.

4. The reaction product as recited in Claim 1, wherein the tertiary aralkyl diisocyanate compound is meta- or para-α, α , α', α'-tetramethylxylylenediisocyanate and the polyol is trimethylolpropane.

5. A reaction product of a tertiary aralkyl diisocyanate compound of the formula:

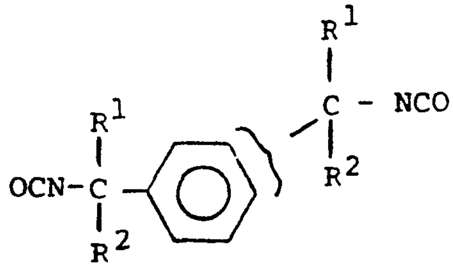

wherein $R^1$ and $R^2$ are each independently selected from alkyl or substituted alkyl, with a polyol material in amount sufficient to provide an NCO/OH ratio in the reaction mixture of from about 2 to about 10.0, the NCO groups in said reaction product adduct each being further reacted with a blocking component such that a heat labile group capable of regenerating free NCO groups at elevated temperatures is provided.

6. A blocked reaction product as recited in Claim 5, wherein said blocking component is selected from methylethylketoxime, ε-caprolactam, or mixtures of the foregoing.

7. A blocked reaction product as recited in Claim 5, wherein said tertiary aralkyl diisocyanate is m- or p-tetramethylxylylenediisocyanate, said polyol is trimethylolpropane and said blocking agent is ε-caprolactam.

8. The polyurethane reaction product from reaction of a blocked reaction product defined by Claim 5 with a polymeric polyol compound.

9. A polyisocyanate adduct of α, α, α', α'-tetramethylxylylene diisocyanate and a polyol selected from the group consisting of: trimethylolpropane; glycerol; 1,2,6-hexanetriol; sorbitol, pentaerythritol; and hydroxylated oligomers and polymers.

10. A compound of the formula:

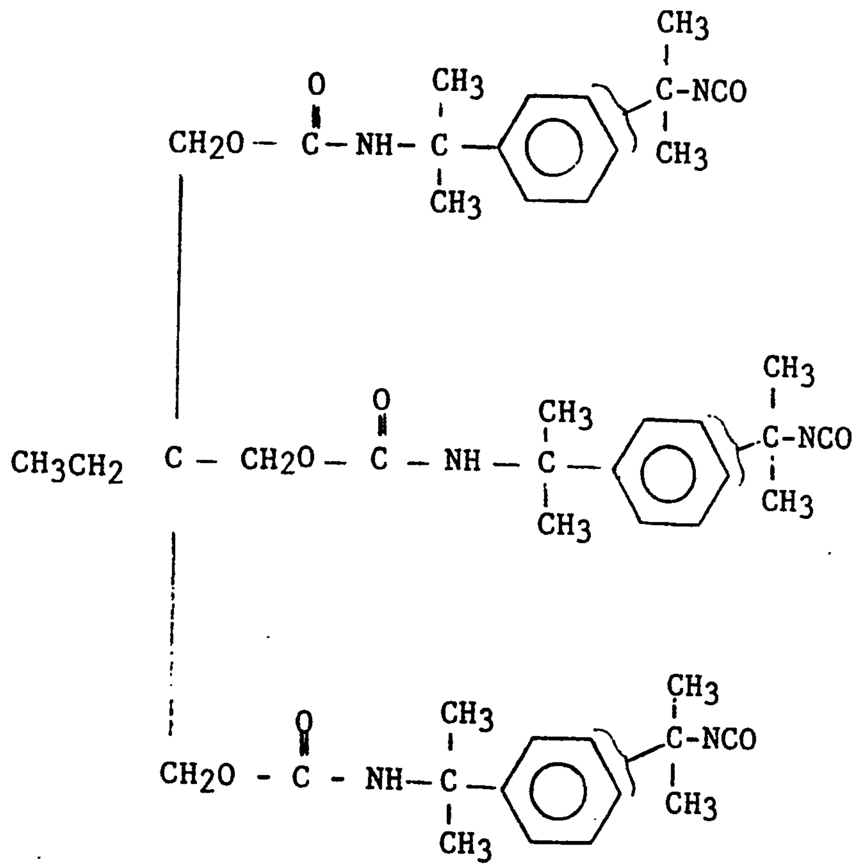

wherein the isocyanatopropyl substituents are meta- or para- positioned.

European Patent Office

**EUROPEAN SEARCH REPORT**

0182996
Application number

EP 85 11 2033

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | DE-A-1 950 262 (DU PONT)<br>* Claim 1; page 9, paragraph 1 - page 10, paragraph 2; page 12, paragraph 1 *<br>--- | 1,2,9 | C 08 G 18/76<br>C 08 G 18/80<br>C 07 C 125/073<br>C 07 C 125/077 |
| X | CHEMICAL ABSTRACTS, vol. 102, no. 10, 11th March 1985, page 80, abstract no. 80417d, Columbus, Ohio, US; & JP - A - 59 115 365 (MITSUI TOATSU CHEMICALS INC.) 03.07.1984<br>* Abstract *<br>--- | 1-5,9,10 | |
| P,X | EP-A-0 149 765 (AMERICAN CYANAMID) (31.07.85)<br>* Page 5, line 19 - page 6, line 8; page 8, lines 9-31; page 14, lines 1-7; page 18, lines 1-9 *<br>--- | 1-4,9 | |
| | | | TECHNICAL FIELDS SEARCHED (Int. Cl.4) |
| A | EP-A-0 111 694 (AMERICAN CYANAMID)<br>* Claim 5; example 1 *<br>--- | 1 | C 08 G<br>C 07 C |
| A | JOURNAL OF CELLULAR PLASTICS, vol. 18, no. 6, November-December 1982, pages 376-383, Technomic Publ. Co., Inc., Westport, Connecticut, US; V.D. ARENDT et al.: "m- and p-TMXDI: two new isocyanates for the polyurethane industry"<br>* Page 378, table 4 *<br>--- -/- | 1 | |

The present search report has been drawn up for all claims

| Place of search | Date of completion of the search | Examiner |
|---|---|---|
| THE HAGUE | 27-02-1986 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82

European Patent Office

# EUROPEAN SEARCH REPORT

0182996

Application number

EP 85 11 2033



## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | GB-A- 808 574 (BAYER)<br>--- | | |
| A | FR-A-1 516 521 (TAKEDA CHEMICAL INDUSTRIES)<br>----- | | |
| | | | TECHNICAL FIELDS SEARCHED (Int. Cl.4) |

The present search report has been drawn up for all claims

| Place of search | Date of completion of the search | Examiner |
|---|---|---|
| THE HAGUE | 27-02-1986 | VAN PUYMBROECK M.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82